(19) **Europäisches Patentamt**
**European Patent Office**
**Office européen des brevets**

(11) **EP 4 311 841 A1**

(12) **EUROPEAN PATENT APPLICATION**

(43) Date of publication:
**31.01.2024 Bulletin 2024/05**

(51) International Patent Classification (IPC):
**C08J 9/12** *(2006.01)* **B21D 22/20** *(2006.01)*
**C08J 9/36** *(2006.01)* **B29C 44/56** *(2006.01)*

(21) Application number: **23185504.0**

(22) Date of filing: **14.07.2023**

(52) Cooperative Patent Classification (CPC):
**C08J 9/36; B21D 22/20; B29C 44/5636;**
**C08J 9/122;** C08J 2201/03; C08J 2203/06;
C08J 2367/04

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.07.2022 JP 2022120482**

(71) Applicant: **Ricoh Company, Ltd.**
**Tokyo 143-8555 (JP)**

(72) Inventors:
• **HIROKAWA, Yuya**
**Tokyo, 143-8555 (JP)**
• **MIYAKOSHI, Ryo**
**Tokyo, 143-8555 (JP)**
• **OGAWA, Satoshi**
**Tokyo, 143-8555 (JP)**
• **KUMAI, Yoshimitsu**
**Tokyo, 143-8555 (JP)**
• **TAMURA, Risa**
**Tokyo, 143-8555 (JP)**

(74) Representative: **Marks & Clerk LLP**
**15 Fetter Lane**
**London EC4A 1BW (GB)**

(54) **METHOD OF MANUFACTURING MOLDED BODY**

(57) Provided is a method of manufacturing a molded body. The method includes: producing a foam sheet having a crystallinity degree A of 7.5% or less by using a composition containing polylactic acid comprising 98 mol% or more of any one among a D-isomer of lactic acid and an L-isomer of lactic acid as a constituent monomer unit; and molding the foam sheet with heat to produce a molded body, and a difference (B - A) between the crystallinity degree A of the foam sheet and the crystallinity degree B of the molded body is 20.0% or more and 40.0% or less.

**EP 4 311 841 A1**

**Description**

BACKGROUND

Technical Field

The present disclosure relates to a method of manufacturing a molded body.

Related Art

Plastics are processed into products of various shapes such as bags and containers and widely distributed. However, plastic products hardly decompose in the natural environment, so that disposal after use poses a problem. With the growing environmental awareness in recent years, materials for plastic products are actively developed to replace non-biodegradable plastics that hardly decompose in the natural environment with biodegradable plastics that easily decompose in the natural environment. Among these biodegradable plastics, polylactic acid is attracting attention as a substitute material for non-biodegradable plastics, because the properties of polylactic acid are similar to those of conventionally used plastics such as polystyrene.

One widely used form of polystyrene is foamed polystyrene, which is obtained by foaming polystyrene and has functions such as a low weight, cushioning properties, and heat insulating properties. As an eco-friendly substitute material to such foamed polystyrene, there has also been proposed foamed polylactic acid using polylactic acid, which is a biodegradable plastic (for example, see Japanese Unexamined Patent Application Publication No. 2007-46019, Japanese Patent No. 5207277, Japanese Patent No. 5454137, and Japanese Unexamined Patent Application Publication No. 2006-328225).

However, it is noted that polylactic acid generally has low heat resistance due to having a low glass transition temperature (about 60°C). For example, if polylactic acid is applied to producing a food container, problems such as deformation and formation of holes may occur in the food container manufactured by polylactic acid when the container is exposed to hot water or used for cooking in a microwave oven. For example, a method of improving the heat resistance by increasing the crystallinity degree of polylactic acid in a molding process is also known as a method for improving the heat resistance of a food container formed by foamed polylactic acid (see Japanese Patent No. 4842745 and Japanese Unexamined Patent Application Publication No. 2020-158608).

SUMMARY

An object of the present invention is to provide a method of manufacturing a molded body having excellent formability and heat resistance.

A method of manufacturing a molded body according to the present embodiment as a means for solving the above-described problems includes: producing a foam sheet having a crystallinity degree A of 7.5% or less by using a composition containing polylactic acid comprising 98 mol% or more of any one among a D-isomer of lactic acid and an L-isomer of lactic acid as a constituent monomer unit; and molding the foam sheet with heat to produce a molded body having a crystallinity degree B, and a difference (B - A) between the crystallinity degree A of the foam sheet and the crystallinity degree B of the molded body is 20.0% or more and 40.0% or less.

According to embodiments of the present invention, a method of manufacturing a molded body that has excellent formability and heat resistance is provided.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram illustrating an example of a kneading unit in an apparatus for manufacturing a molded body according to the present embodiment; and
FIG. 2 is a schematic view illustrating an example of a foam sheet producing device in the apparatus for manufacturing a molded body according to the present embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

(Method of Manufacturing Molded Body and Apparatus for Manufacturing Molded Body)

A method of manufacturing a molded body of the present embodiment includes a foam sheet producing step of producing a foam sheet having a crystallinity degree A of 7.5% or less by using a composition containing polylactic acid comprising 98 mol% or more of any one among a D-isomer of lactic acid and an L-isomer of lactic acid as a constituent monomer unit (may be referred to as "polylactic acid-containing composition", "polylactic acid resin composition", and "masterbatch" hereinafter), and a molding step of molding the foam sheet with heat so that a difference (B - A) between the crystallinity degree A of the foam sheet and a crystallinity degree B of a molded body molded from the foam sheet is 20.0% or more and 40.0% or less. If desired, the method further includes other steps.

An apparatus for manufacturing a molded body of the present embodiment includes a foam sheet producing device that produces a foam sheet so that a crystallinity degree A is 7.5% or less by using a composition containing polylactic acid comprising 98 mol% or more of any one among the D-isomer of lactic acid and the L-isomer of lactic acid as a constituent monomer unit, and a molding device that heat-molds the foam sheet to produce a molded body having a crystallinity degree B so that a difference (B - A) between the crystallinity degree A of the foam sheet and the crystallinity degree B of the molded body is 20.0% or more and 40.0% or less. If desired, the apparatus further includes other devices.

The method of manufacturing a molded body of the present embodiment is suitably implemented by the apparatus for manufacturing a molded body of the present embodiment.

The inventors of the present invention have found that, when attempting to manufacture a container, in particular, a container having a deep draw (deep-drawn container), from a foam sheet formed of a composition containing polylactic acid (may be referred to as "foamed polylactic acid sheet" hereinafter), if a foamed polylactic acid sheet with a high degree of crystallization is used, it is not possible to sufficiently soften the foamed polylactic acid sheet during the molding process, and thus, the sheet may break and formability may deteriorate during molding. Further, if the sheet is not sufficiently softened during the molding process, internal stress remains, so that the container shrinks or is deformed when being exposed to hot water or used for cooking in a microwave oven.

The inventors of the present invention have conducted intensive studies to solve the problems described above, and found an optimum combination of the difference (B - A) between the crystallinity degree A of a foam sheet formed from a composition containing unmolded polylactic acid (may be referred to as "polylactic acid-based resin", "polylactic acid resin", and the like hereinafter) and the crystallinity degree B of a molded body after heat-molding. Therefore, even a deep-drawn container, which could not be achieved by a conventional manufacturing method of a molded body, has excellent formability and heat resistance.

Below, a method of manufacturing a molded body and an apparatus for manufacturing a molded body according to the present embodiment will be described in detail with reference to the drawings. The present embodiment is not limited to the embodiment described below, may be another embodiment, and may be subject to changes such as additions, modifications, and omissions within the scope conceivable for a person skilled in the art. All of these changed configurations are also included in the scope of the present embodiment, as long as an operation and an effect of the present embodiment are exhibited.

<Foam Sheet Producing Step and Foam Sheet Producing Device>

The foam sheet producing step is a step of producing a foam sheet having a crystallinity degree A of 7.5% or less by using a composition containing polylactic acid comprising 98 mol% or more of any one among the D-isomer of lactic acid and the L-isomer of lactic acid as a constituent monomer unit. The foam sheet producing step preferably includes a raw material mixing and melting process, a compressible fluid supply process, a kneading process, and a foaming process, and further includes other processes, if desired.

The foam sheet producing device is a device that produces a foam sheet having a crystallinity degree A of 7.5% or less by using a composition containing polylactic acid comprising 98 mol% or more of any one among the D-isomer of lactic acid and the L-isomer of lactic acid as a constituent monomer unit. The foam sheet producing device preferably includes a raw material mixing and melting unit, a compressible fluid supply unit, a kneading unit, and a foaming unit, and further includes other members, if desired.

The foam sheet producing step is suitably implemented by the foam sheet producing device.

- Polylactic Acid-Containing Composition -

The composition containing polylactic acid (hereinafter "polylactic acid-containing composition") contains the polylactic acid and further includes other components, if desired.

-- Polylactic Acid --

The polylactic acid is biodegradable by microorganisms, and thus is attracting attention as an eco-friendly polymer material having low environmental burden (see Inoue, Yoshio, "Structure, Properties, and Biodegradability of Aliphatic Polyesters", KOBUNSHI (High Polymers), 2001, volume 50, no. 6, p. 374-377). Examples of the polylactic acid include, but are not limited to, copolymers (DL-lactic acid) of the D-isomer of lactic acid (D-lactic acid) and the L-isomer of lactic acid (L-lactic acid); homopolymers of any one among D-lactic acid and L-lactic acid; and ring-opened polymers of one or more lactides selected from the group consisting of the D-isomer of lactide (D-lactide), the L-isomer of lactide (L-lactide), and DL-lactide. Each of these may be used alone or in combination with others. The polylactic acid may be appropriately synthesized or a commercially available product may be used as the polylactic acid.

If a copolymer of D-lactic acid and L-lactic acid (DL-lactic acid), or a ring-opened polymer of one or more lactides selected from the group consisting of D-lactide, L-lactide, and DL-lactide is used as the polylactic acid, as the amount of the optical isomer having a lower content among the D-isomer and the L-isomer decreases, the crystallinity tends to increase, and the melting point and the crystallization speed tend to increase. Further, as the amount of the optical isomer having the lower content among the D-isomer and the L-isomer increases, the crystallinity tends to decrease, so that the material eventually becomes amorphous.

In the present embodiment, it is preferable to impart sufficient heat resistance by crystallization accompanying bubble growth during foaming, so that the molar ratio of any one among the D-isomer of lactic acid and the L-isomer of lactic acid, which are the constituent monomer units of the polylactic acid contained in the polylactic acid-containing composition, is 98 mol% or more and preferably 99 mol% or more in the polylactic acid. Thus, polylactic acid including only one of the optical isomers among the D-isomer of lactic acid and the L-isomer of lactic acid may be used as the polylactic acid. If the molar ratio of any one among the D-isomer of lactic acid and the L-isomer of lactic acid, which are the constituent monomer units of the polylactic acid, is less than 98 mol% in the polylactic acid, a molded body obtained by molding a foam sheet formed by the polylactic acid-containing composition does not have good heat resistance. On the other hand, if the molar ratio of any one among the D-isomer of lactic acid and the L-isomer of lactic acid, which are the constituent monomer units of the polylactic acid, is 98 mol% or more in the polylactic acid, the crystallization speed increases, the crystallization progresses during the molding process, and the formability and the heat resistance are improved.

In the polylactic acid in the foam sheet, an analysis by liquid chromatography (LC-MS) using an optically active column may be used to confirm whether any one of the D-isomer of lactic acid and the L-isomer of lactic acid, which are the constituent monomer units, has a molar ratio of 98 mol% or more in the polylactic acid. A measurement procedure by LC-MS, a measurement device, and measurement conditions are described below.

The foam sheet is pulverized in a frozen state, 200 mg of the frozen and pulverized powder of the foam sheet is weighed into an Erlenmeyer flask using a precision balance, and 30 mL of an aqueous 1 N sodium hydroxide solution is added. Next, the Erlenmeyer flask is heated to 65°C while being shaken to completely dissolve the polylactic acid. Subsequently, 1 N hydrochloric acid is used to adjust the pH to 4 to 7, and a volumetric flask is used to dilute the mixture to a predetermined volume to obtain a polylactic acid solution. Next, the polylactic acid solution is filtered through a 0.45 $\mu$m membrane filter and then analyzed by liquid chromatography.

Based on the obtained chart, from a peak area originating from the D-isomer of lactic acid, a peak area originating from the L-isomer of lactic acid, and the total area of these peak areas, a peak area ratio originating from the D-isomer of lactic acid and a peak area ratio originating from the L-isomer of lactic acid are calculated. The results are used as the abundance ratios to calculate a quantitative ratio of the D-isomer and a quantitative ratio of the L-isomer. The arithmetic mean value of the results obtained by performing the above-described operation three times is defined as the amount of the D-isomer and the amount of the L-isomer of lactic acid included in the polylactic acid in the foam sheet of the present embodiment.

[Measurement Device and Measurement Conditions for LC-MS]

- HPLC device (liquid chromatograph): PU-2085 PLUS type system (manufactured by JASCO Corporation)
- Column: CHROMOLITH (registered trademark) coated with SUMICHIRAL OA-5000 (inner diameter of 4.6 mm, length of 250 mm) (manufactured by Sumitomo Analysis Center Co., Ltd.)
- Temperature of column: 25°C
- Mobile phase: 2 mM mixed solution of $CuSO_4$ aqueous solution with 2-propanol ($CuSO_4$ aqueous solution: 2-propanol (volume ratio) = 95: 5)
- Flow rate of mobile phase: 1.0 mL/min
- Detector: UV 254 nm
- Injection volume: 20 $\mu$L

The foam sheet is measured as described above. If the larger one among the peak area originating from the D-isomer of lactic acid and the peak area originating from the L-isomer of lactic acid has a peak area of 98% or more with respect to the total area of the peak area originating from the D-isomer of lactic acid and the peak area originating from the L-isomer of lactic acid, it can be said that any one of the D-isomer of lactic acid and the L-isomer of lactic acid, which are the constituent monomer units of the polylactic acid, has a molar ratio of less than 98 mol% in the polylactic acid.

The content of the polylactic acid in the polylactic acid-containing composition is not particularly limited and may be appropriately selected according to a purpose. However, the content is preferably 98 mass% or more with respect to the total amount of organic matter in the polylactic acid-containing composition, from the viewpoint of biodegradability and recyclability (recycling becomes easier).

The content of each component in the polylactic acid-containing composition is synonymous with the content of each component in the foam sheet formed of the polylactic acid-containing composition.

The organic matter in the polylactic acid-containing composition mainly includes polylactic acid. However, examples of organic matter other than the polylactic acid include, but are not limited to, an organic nucleating material used as a foaming nucleating agent described later and a chain extender. If an inorganic nucleating material is used as the foaming nucleating material of the foam sheet, the inorganic nucleating material does not correspond to the organic matter.

The content of the polylactic acid can be calculated from the ratio of the materials used in the foam sheet producing step. However, if the ratio of the materials being used is unknown, the content of the polylactic acid in the foam sheet can be calculated by nuclear magnetic resonance (NMR) measurement. A measurement procedure by nuclear magnetic resonance (NMR), a measurement device, and measurement conditions are described below.

100 mg of a 1,3,5-trimethoxybenzene standard (for quantitative NMR, manufactured by Fujifilm Wako Pure Chemical Industries, Ltd.) as an internal standard are weighed and dissolved in deuterated chloroform (containing 0.3 vol% of TMS) in a 10 mL volumetric flask, to be used as an NMR solvent.

The foam sheet is pulverized in a frozen state and 10 mg of the frozen and pulverized powder of the foam sheet are weighed into a vial using a precision balance. About 1 g (about 0.7 mL) of the NMR solvent (the 1,3,5-trimethoxybenzene standard dissolved in the deuterated chloroform solution) are added to the powder, and the powder is dissolved during half a day to prepare a polylactic acid solution. Next, the prepared polylactic acid solution is filtered through a 0.45 $\mu$m membrane filter and placed in an NMR tube having a diameter of 5 mm, to perform an NMR measurement using the NMR measurement device and the measurement conditions described below.

After confirming the baseline of the obtained NMR spectrum, the content of the polylactic acid can be calculated from the integrated value of 5.2 ppm (-CH-) originating from the polylactic acid and the integrated value of 6.1 ppm (H-Ph) of the internal standard, by using a known polylactic acid as a content rate of polylactic acid of 100 mass% (REF).

[Measurement Device and Measurement Conditions for NMR]

- Nuclear magnetic resonance (NMR) device: JNM-ECX-500 FT-NMR (manufactured by JEOL Ltd.)
- Measurement temperature: 25°C
- Measurement core: 1 H (500 MHz) 32K data points
- Observation width: 17 ppm
- Number of integrations: 8 times
- Measurement pulse: 90° pulse
- Relaxation Delay: 60 seconds

- Offset: 8 ppm
- SPIN: OFF
- $^{13}C$ decoupling: ON
- irr _offset: 70 ppm
- irr_noise: MPF8

-- Other Components --

The other components in the polylactic acid-containing composition are not particularly limited, as long as these components are usually contained in foam sheets. The other components can be appropriately selected according to a purpose, and examples thereof include, but are not limited to, foaming nucleating materials, chain extenders, foaming agents, and additives. Each of these may be used alone or in combination with others.

--- Foaming Nucleating Material ---

The foaming nucleating material (may be referred to as "filler" hereinafter) is preferably contained to adjust a cell diameter and a number density of the foam sheet and improve the crystallinity of the polylactic acid.
The foaming nucleating material is not particularly limited and may be appropriately selected according to a purpose. Examples of the foaming nucleating material include, but are not limited to, an inorganic nucleating material and an organic nucleating material. Each of these can be used alone or in combination with others.
Examples of the inorganic nucleating material include, but are not limited to, talc, kaolin, calcium carbonate, layered silicate, zinc carbonate, wollastonite, silica, alumina, magnesium oxide, titanium oxide, calcium silicate, sodium aluminate, calcium aluminate, sodium aluminosilicate, magnesium silicate, hollow glass beads, Carbon Black, zinc oxide, antimony trioxide, Zeolite, hydrotalcite, metal fiber, metal whiskers, ceramic whiskers, potassium titanate, boron nitride, graphite, glass fiber, and carbon fiber. Each of these may be used alone or in combination with others. Among these, silica, titanium oxide, and layered silicate are preferable as the inorganic nucleating material, because these materials can be efficiently dispersed, the added amount can be reduced, and the environmental burden can be reduced.
Examples of the organic nucleating material include, but are not limited to, naturally occurring polymers such as starch, cellulose nanofibers, cellulose fine particles, wood flour, soy pulp, rice hulls, bran, and modified products thereof. Further examples include glycerin compounds, sorbitol compounds, benzoic acid, and metal salts, phosphoric acid ester metal salts, rosin compounds, and the like of these compounds. Each of these can be used alone or in combination with others.
The number average particle diameter of the foaming nucleating material is not particularly limited and may be appropriately selected according to a purpose. However, the number average particle diameter along the short axis direction is preferably 100 nm or less, so that the surface area per added amount can be increased, and the added amount can be reduced.
The content of the foaming nucleating material is not particularly limited and may be appropriately selected according to a purpose, but is preferably 3 mass% or less with respect to the total amount of the polylactic acid-containing composition. When the content of the foaming nucleating material is 3 mass% or less, the physical properties of the foam sheet formed by the polylactic acid-containing composition are such that the foam sheet is hard and does not become brittle. Further, it is preferable that the content of a non-biodegradable foaming nucleating material is lower, and thus, the content of the foaming nucleating material is more preferably 1 mass% or less with respect to the total amount of the polylactic acid-containing composition.
The content of the organic nucleating material can be determined by gas chromatography-mass spectrometry (GC-MS) using the measurement device and measurement conditions described below.

[Measurement Device and Measurement Conditions for GC-MS]

- Gas chromatography-mass spectrometry (GC-MS) device: GC-MS QP2010 (manufactured by Shimadzu Corporation), auxiliary device PY-3030D (manufactured by Frontier Laboratories Ltd.)
- Separation column: ULTRA ALLOY UA5-30M-0.25F (manufactured by Frontier Laboratories Ltd.)
- Heating temperature of sample: 300°C
- Oven temperature of column: 50°C (maintained for 1 minute) - heating rate 15°C/min - 320°C (maintained for 6 minutes)
- Ionization method: Electron Ionization (E.I.) method
- Detected mass range: 25 to 700 (m/z)

For example, the content of the inorganic nucleating agent can be determined by a method conforming to JIS K 7250-1: 2006 (Plastics - Determination of ash - Part 1: General methods).

-- Chain Extender --

The chain extender is not particularly limited and may be appropriately selected according to a purpose, but is preferably a compound reactive with the hydroxyl group and/or the carboxylic acid group of the polylactic acid. Examples of the chain extender include, but are not limited to, epoxy-based chain extenders (chain extenders having epoxy groups) and isocyanate-based chain extenders (chain extenders having isocyanate groups). Each of these chain extenders can be used alone or in combination with others. Among these chain extenders, (meth)acrylic-styrene chain extenders having an epoxy functionality and including two or more epoxy groups in the molecule and polyisocyanates having two or more isocyanate groups in the molecule are preferred. (Meth)acrylic-styrene chain extenders having an epoxy functionality and including three or more epoxy groups in the molecule and polyisocyanates having three or more isocyanate groups in the molecule are more preferred, from the viewpoint of introducing a branched structure into the polylactic acid, so that the melt strength can be efficiently improved and residual unreacted matter can be reduced. If such a chain extender is used, it is possible to suppress coalescence and breakage of cells, and improve the foaming ratio.

Here, the (meth)acrylic-styrene chain extender having an epoxy functionality and including two or more epoxy groups in the molecule is a polymer obtained by a copolymerization between a (meth)acrylic monomer having an epoxy group and a styrene monomer.

Examples of the (meth)acrylic monomer having an epoxy group include, but are not limited to, monomers having a 1,2-epoxy group such as glycidyl acrylate and glycidyl methacrylate. Examples of the styrene monomer include, but are not limited to, styrene and $\alpha$-methyl styrene.

The (meth)acrylic-styrene chain extender having an epoxy functionality and including two or more epoxy groups in the molecule may contain a (meth)acrylic monomer having no epoxy group as a copolymerization component. Examples of such (meth)acrylic monomers include, but are not limited to, methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate.

Examples of the polyisocyanate having two or more isocyanate groups in the molecule include, but are not limited to, aliphatic diisocyanates such as 1,6-hexamethylene diisocyanate, 3-isocyanatomethyl-3,5,5-trimethylcyclohexyl isocyanate (isophorone diisocyanate), 1,4-tetramethylene diisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methyl cyclohexyl-2,6-diisocyanate, xylylene diisocyanate, 1,3-bis(isocyanate)methylcyclohexane, tetramethylxylylene diisocyanate, transcyclohexane-1,4-diisocyanate, and lysine diisocyanate; alicyclic polyisocyanates such as isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate; aromatic diisocyanates such as 2,4-tolylene diisocyanate, 2,6-tolylene diisocyanate, diphenylmethane-4,4'-isocyanate, 1,5'-naphthene diisocyanate, tolidine diisocyanate, diphenylmethylmethane diisocyanate, tetraalkyldiphenylmethane diisocyanate, 4,4'-dibenzyl diisocyanate, and 1,3-phenylene diisocyanate; triisocyanates such as lysine ester triisocyanate, triphenylmethane triisocyanate, 1,6,11-undecane triisocyanate, 1,8-isocyanate-4,4-isocyanatomethyloctane, 1,3,6-hexamethylene triisocyanate, and bicycloheptane triisocyanate; triisocyanate compounds such as adducts of trimethylolpropane and 2,4-tolylene diisocyanate and adducts of trimethylolpropane and diisocyanates such as 1,6-hexamethylene diisocyanate, and modified polyisocyanate compounds obtained by reacting polyhydric alcohols such as glycerin and pentaerythrol with the aliphatic and aromatic diisocyanate compounds mentioned above or the triisocyanate compounds mentioned above. Each of these polyisocyanates may be used alone, or two or more types of these polyisocyanates may be mixed and used.

The content of the chain extender is not particularly limited, and may be appropriately selected according to the molecular weight of the polylactic acid and the molecular weight distribution of the polylactic acid. When the amount of polylactic acid having low molecular weight increases, it is preferable to use a larger amount of the chain extender to impart a melt strength suitable for foaming. However, if the content of the chain extender increases, the biodegradability of the foam sheet obtained from the polylactic acid-containing composition and the crystallinity of the polylactic acid tend to deteriorate. Therefore, the content of the chain extender in the polylactic acid-containing composition is preferably 2 parts by mass or less with respect to 100 parts by mass of the total mass of the polylactic acid and the chain extender.

Other examples of the chain extender include, but are not limited to, compounds having two or more oxazoline groups in the molecule and compounds having two or more carbodiimide groups in the molecule (polycarbodiimide-based chain extenders).

--- Foaming Agent ---

The foaming agent is not particularly limited and may be appropriately selected according to a purpose. Examples of the foaming agent include, but are not limited to, physical foaming agents and chemical foaming agents. In the method of manufacturing a molded body, it is preferable to use physical foaming in a foaming process described later, because it is preferable that the foam sheet is clean and has little residual matter, and a physical foaming agent is also preferable as the foaming agent.

The foaming agent used in the physical foaming is not particularly limited and may be appropriately selected according a purpose. Examples of the foaming agent include, but are not limited to, hydrocarbons such as lower alkanes including propane, normal butane, isobutane, normal pentane, isopentane, and hexane; ethers such as dimethyl ether; halogenated hydrocarbons such as methyl chloride and ethyl chloride; carbon dioxide; and nitrogen. Each of these foaming agents can be used alone or in combination with others.

Among these foaming agents, it is preferable to use carbon dioxide and nitrogen, because carbon dioxide and nitrogen are easy to handle and have no odor and low environmental burden.

The content of the foaming agent is not particularly limited and may be appropriately selected according a purpose. However, the content of the foaming agent is preferably 2 mass% or more and 7 mass% or less, more preferably 3 mass% or more and 7 mass% or less, and still more preferably 4 mass% or more and 5 mass% or less, with respect to the total amount of the polylactic acid-containing composition.

When the content of the foaming agent is 2 mass% or more, the cell diameter decreases, and the heat insulating property of the molded body obtained by molding the foam sheet increases, so that the heat resistance is improved. When the content of the foaming agent is 7 mass% or less, the occurrence of defects caused when an excessive amount of the foaming agent leaves the foam sheet is suppressed, and the strength of the foam sheet is improved, so that the foam sheet is unlikely to break during molding. Therefore, the moldability of a molded body, in particular a deep-drawn container, obtained by molding the foam sheet, is improved.

--- Additive ---

Examples of the additive include, but are not limited to, heat stabilizers, antioxidants, and plasticizers. Each of these additives can be used alone or in combination with others.

The content of the additive is not particularly limited and may be appropriately selected according a purpose, but is preferably 2 mass% or less with respect to the total amount of organic matter in the polylactic acid-containing composition. When the content of the additive is 2 mass% or less with respect to the total amount of organic matter in the polylactic acid-containing composition, the recyclability is further improved.

«Raw Material Mixing and Melting Process and Raw Material Mixing and Melting Portion»

The raw material mixing and melting process is a process of mixing and melting raw materials of the polylactic acid-containing composition.

The raw material mixing and melting portion is a member that mixes and melts the raw materials of the polylactic acid-containing composition.

The raw material mixing and melting process is suitably performed by the raw material mixing and melting portion.

In the raw material mixing and melting process, the raw materials of the polylactic acid-containing composition are heated and melted.

The heating temperature in the raw material mixing and melting process is not particularly limited, as long as the raw materials can be mixed and melted. The heating temperature may be appropriately selected according a purpose, but is preferably equal to or higher than the melting temperature of the polylactic acid. The raw materials can be mixed and melted by setting the temperature of the raw material mixing and melting portion to a temperature equal to or higher than the melting temperature of the polylactic acid.

Thus, the raw materials can be uniformly mixed with the compressible fluid in the subsequent compressible fluid supply process.

«Compressible Fluid Supply Process and Compressible Fluid Supply Portion»

The compressible fluid supply process is a process of supplying a compressible fluid to the raw material of the polylactic acid-containing composition in a melted state obtained in the raw material mixing and melting process, to plasticize the molten polylactic acid. It is preferable that the foam sheet producing step includes the compressible fluid supply process, so that the foaming nucleating material can be uniformly dispersed in the polylactic acid. If the compressible fluid is the same as the foaming agent, the kneading of the foaming nucleating material in the kneading process and the foaming in the foaming process can be performed in a series of processes, which is preferable as a manufacturing mode from the viewpoint of reducing the environmental burden.

The compressible fluid supply portion is a member that supplies a compressible fluid to the raw material of the polylactic acid-containing composition in a molten state obtained in the raw material mixing and melting process, to plasticize the molten polylactic acid.

The compressible fluid supply process is suitably performed by the compressible fluid supply portion.

- Compressible Fluid -

Examples of substances that can be used in a state of the compressible fluid are not particularly limited, may be appropriately selected according to a purpose, and examples thereof include, but are not limited to, carbon monoxide, carbon dioxide, dinitrogen monoxide, nitrogen, methane, ethane, propane, 2,3-dimethylbutane, ethylene, and dimethyl ether. Each of these substances can be used alone or in combination with others. Among these substances, carbon dioxide is preferable as the substance that can be used in the state of the compressible fluid, because carbon dioxide is nonflammable and easy to handle.

The amount of the compressible fluid to be supplied to the raw material of the polylactic acid-containing composition in the molten state not particularly limited and may be appropriately adjusted, because the solubility of the compressible fluid in the polylactic acid varies depending on the combination of the type of the polylactic acid and the compressible fluid, the temperature, the pressure, and the like. For example, in the case of a combination of the polylactic acid and the carbon dioxide, when the raw material of the polylactic acid-containing composition is 100 parts by mass, the amount of carbon dioxide being supplied is preferably 2 parts by mass or more and 7 parts by mass or less, more preferably 3 parts by mass or more and 7 parts by mass or less, and even more preferably 4 parts by mass or more and 5 parts by mass or less. When the amount of the carbon dioxide being supplied is 2 parts by mass or more with respect to 100 parts by mass of the polylactic acid-containing composition, it is possible to prevent a limitation due to the effect of plasticization and a coarsening of the cell diameter. Further, when the amount of carbon dioxide being supplied is 7 parts by mass or less with respect to 100 parts by mass of the polylactic acid-containing composition, it is possible to prevent a deterioration of the surface properties due to rapid foaming.

<<Kneading Process and Kneading Portion>>

The kneading process is a process of producing a polylactic acid resin composition by melting and kneading the raw materials of the polylactic acid-containing composition to which the compressible fluid has been supplied and that is obtained in the compressible fluid supply process. In the kneading, it is preferable that a foaming agent is further included as a raw material of the polylactic acid-containing composition to perform foaming more efficiently in the foaming process described below.

The kneading portion is a member that produces a polylactic acid resin composition by melting and kneading the raw materials of the polylactic acid-containing composition to which the compressible fluid has been supplied and that is obtained in the compressible fluid supply process.

The kneading step is suitably implemented by the kneading member.

The kneading portion is not particularly limited and may be appropriately selected according a purpose. However, for use at a viscosity suitable for kneading, a single screw extruder, a twin screw extruder, a kneader, a shaftless cage-type stirring tank, a tubular polymerization tank including a Sulzer SMLX type static mixer, and the like can be used as the kneading portion. Among these, the kneading portion is preferably a twin screw extruder in terms of kneading properties, production efficiency, and color tone, stability, and heat resistance of the polylactic acid.

Examples of the twin screw extruder include, but are not limited to, a supercritical extrusion kneading device (manufactured by PLABOR Research Laboratory of Plastics Technology Co., Ltd).

The temperature of the kneading portion is preferably set so that the foaming nucleating agent has a viscosity suitable for kneading.

The set temperature of the kneading portion is not particularly limited, because the temperature varies depending on the specifications of the reaction device, the resin type, the structure and the molecular weight of the resin, and the like. The set temperature of the kneading portion may be appropriately selected, but is preferably +10°C or more and +35°C or less higher than the melting point of the polylactic acid. By setting the set temperature in the kneading portion to +10°C or more and +35°C or less higher than the melting point of the polylactic acid, the set temperature is different from the crystallization temperature of the polylactic acid. Therefore, in the foaming process described below, the foam sheet can be produced so that the crystallinity degree A is 7.5% or less.

Here, the melting point of the polylactic acid is determined by a differential scanning calorimetry (DSC) measurement conforming to JIS K 7122-1987 (Testing Methods for Heat of Transitions of Plastics).

Specifically, in the DSC measurement of the melting point of the polylactic acid, for example, a differential scanning calorimeter device (for example, Q-2000 model, manufactured by TA Instruments) can be used. A sample of 5 mg to 10 mg cut from the foam sheet is placed in a container of the differential scanning calorimeter device and heated from 10°C to 200°C at a heating rate of 10°C/min. The melting point of the polylactic acid refers to a peak top temperature obtained as follows. After the first cooling, the sample is scanned when the temperature is raised again from 25°C to 200°C at a heating rate of 10°C/min, to obtain the peak top temperature of an endothermic peak observed in a temperature region above the glass transition point. The melting point of the polylactic acid is generally within a range from 150°C to 180°C.

<Foaming Process and Foaming Portion>

The foaming process is a step of vaporizing and removing the compressible fluid dissolved in the polylactic acid resin composition obtained by the kneading process, and generating bubbles in the polylactic acid resin composition to foam the polylactic acid resin composition.

The foaming portion is a member that vaporizes the compressible fluid dissolved in the polylactic acid resin composition obtained by the kneading process, and generates bubbles in the polylactic acid resin composition to foam the polylactic acid resin composition.

The foaming process is suitably implemented by the foaming portion.

The foaming portion is not particularly limited and may be appropriately selected according a purpose. However, for use at a viscosity suitable for kneading, a single screw extruder, a twin screw extruder, a kneader, a shaftless cage-type stirring tank, a tubular polymerization tank including a Sulzer SMLX type static mixer, and the like can be used as the foaming portion. Among these, the foaming portion is preferably a twin screw extruder in terms of kneading properties, production efficiency, and color tone, stability, and heat resistance of the polylactic acid.

Examples of the twin screw extruder include, but are not limited to, a supercritical extrusion kneading device (manufactured by PLABOR Research Laboratory of Plastics Technology Co., Ltd).

A die in the extruder as the foaming portion is not particularly limited and may be appropriately selected according a purpose. Examples of the die include, but are not limited to, a circular die and a T-die. Among these dies, a circular die is preferable from the viewpoint of the bulk density of the foam sheet.

The kneading portion and the foaming portion may be one unit or separate units.

Therefore, the kneading process and the foaming process may be performed simultaneously or may be performed as separate processes.

In the foaming process, an example of the method of vaporizing the compressible fluid dissolved in the polylactic acid resin composition includes, but is not limited to, a method of reducing the pressure by exposing the polylactic acid resin composition to the atmosphere. By this method, the compressible fluid is gradually replaced by air in the atmosphere and can be removed from the foam sheet.

The set temperature of the foaming portion is not particularly limited, because the temperature varies depending on the specifications of the reaction device, the resin type, the structure and the molecular weight of the resin, and the like. The set temperature of the foaming portion may be appropriately selected, but is preferably +10°C or more and +20°C or less higher than the crystallization temperature of the polylactic acid. Specifically, the set temperature of the foaming portion is preferably 155°C or higher and 165°C or lower, more preferably 155°C or higher and 160°C or lower, and even more preferably 158°C or higher and 160°C or lower. By setting the set temperature in the foaming portion to +10°C or more and +20°C or less higher than the crystallization temperature of the polylactic acid, the set temperature is different from the crystallization temperature of the polylactic acid.

Therefore, in the foaming process described above, the foam sheet can be produced so that the crystallinity degree A is 7.5% or less.

Here, the crystallization temperature of the polylactic acid is determined by a differential scanning calorimetry (DSC) measurement conforming to JIS K 7122-1987 (Testing Methods for Heat of Transitions of Plastics).

Specifically, in the DSC measurement of the crystallization temperature of the polylactic acid, for example, a differential scanning calorimeter device (for example, Q-2000 model, manufactured by TA Instruments) can be used. A sample of 5 mg to 10 mg cut from the foam sheet is placed in a container of the differential scanning calorimeter device and heated from 10°C to 200°C at a heating rate of 10°C/min. The temperature is maintained for 10 minutes, and then, the temperature is lowered from 200°C to 10°C at a rate of 10°C/min. The crystallization temperature of the polylactic acid refers to a peak top temperature of an observed exothermic peak, and is generally within a range from 130°C to 150°C.

In the foaming process, the set temperature of the foaming portion may not be constant. The temperature may be lowered gradually or stepwise from the set temperature of the kneading portion in the kneading process to finally set the set temperature of the foaming portion.

The set temperature of the die is not particularly limited, because the temperature varies depending on the specifications of the reaction device, the resin type, the structure and the molecular weight of the resin, and the like. The set temperature of the die may be appropriately selected, but similarly to the set temperature of the foaming portion, is preferably +10°C or more and +20°C or less higher than the crystallization temperature of the polylactic acid. Specifically, the set temperature of the die is preferably 155°C or higher and 165°C or lower, more preferably 155°C or higher and 160°C or lower, and even more preferably 158°C or higher and 160°C or lower. By setting the set temperature in the die to +10°C or more and +20°C or less higher than the crystallization temperature of the polylactic acid, the set temperature is different from the crystallization temperature of the polylactic acid. Therefore, in the foaming process described above, the foam sheet can be produced so that the crystallinity degree A is 7.5% or less.

However, it is very difficult to control crystallization, and additionally, if the crystallization progresses too much, it may reduce the flowability of the polylactic acid-containing composition and make extrusion and foaming difficult in the kneading process. Therefore, it is preferable to use a method in which the foaming nucleating agent is added.

The foaming includes physical foaming and chemical foaming. However, physical foaming is widely used, because physical foaming is a clean foaming method in which little residual matter remains on the foam sheet. Also in the present embodiment, physical foaming is preferable.

The foam sheet producing step will be described in detail below with reference to the drawings, but the present embodiment is not limited thereto.

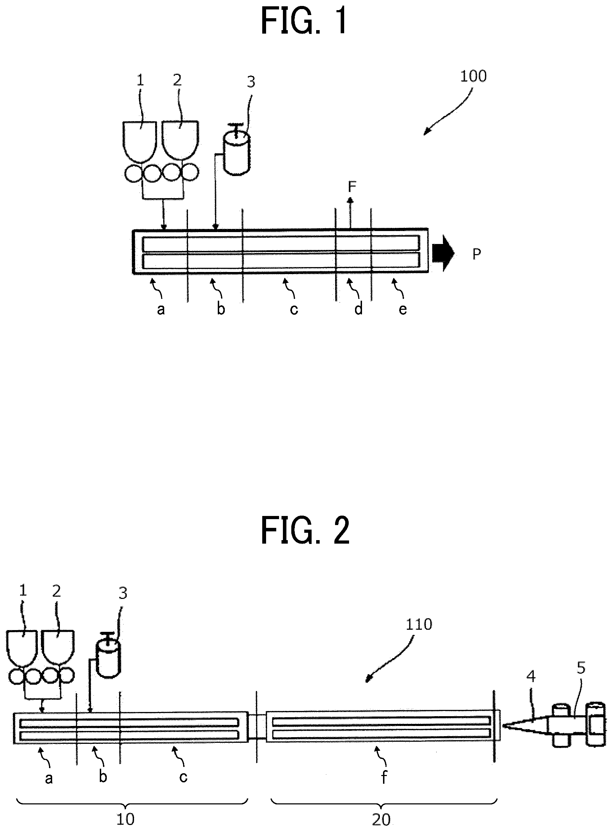

FIG. 1 is a schematic diagram illustrating a twin screw extruder 100 as an example of the kneading portion in the apparatus for manufacturing a molded body according to the present embodiment. For example, the twin screw extruder 100 has a screw diameter of 42 mm and a ratio (L/D) between an extruder length (L) and the screw diameter (D) of 48. In the present example, raw materials such as polylactic acid, a foaming nucleating agent, and a chain extender are supplied from a first supply portion 1 and a second supply portion 2 to a raw material mixing and melting portion a, and the supplied raw materials are mixed and melted. A compressible fluid is supplied to the mixed and molten raw material from a compressible fluid storing portion 3 in a compressible fluid supply portion b. Next, the mixture containing the compressible fluid is kneaded in a kneading portion c. Subsequently, a compressible fluid F is removed from the mixture in a compressible fluid removing portion d, and then, in a molding processing portion e, the mixture is formed into resin pellets P, for example. Thus, a polylactic acid-containing composition (masterbatch) can be produced as a resin composition precursor.

The compressible fluid can be cooled and liquefied and supplied by a metering pump, for example, or solid raw materials such as resin pellets and a foaming nucleating agent can be supplied by a constant feeder, for example.

FIG. 2 illustrates an example of the foam sheet producing device (a continuous foam sheet producing device 110) in a case where the kneading portion and the foaming portion continuously perform a process. As the continuous foam sheet producing device 110, for example, a twin screw extruder can be used, similarly as described above. In the continuous foam sheet producing device 110, raw materials such as polylactic acid, a foaming nucleating agent, and a chain extender are supplied from the first supply portion 1 and the second supply portion 2 to the raw material mixing and melting portion a, and the supplied raw materials are mixed and melted. A compressible fluid is supplied to the mixed and molten raw material from the compressible fluid storing portion 3 in the compressible fluid supply portion b.

Next, the mixture containing the compressible fluid is kneaded in the kneading portion c to obtain a polylactic acid-containing composition. Subsequently, the polylactic acid-containing composition is supplied to a foaming portion f, heated and kneaded in the foaming portion f, and then, extruded and foamed by being exposed to the atmosphere, for example. A foam sheet 4 that is extruded and foamed is rolled up on a mandrel 5.

In the continuous foam sheet producing device 110, a part including the raw material mixing and melting portion a, the compressible fluid supply portion b, and the kneading portion c is also referred to as a first extruder 10, and a part forming the foaming portion f is also referred to as a second extruder 20. In the present example, the mixed, molten, and kneaded raw materials are extruded by the first extruder 10 into the second extruder 20, and the foam sheet is extruded and foamed by the second extruder 20. As the second extruder 20, a circular die, a T-die, and the like can be used, for example.

In the present example, the kneading process is performed by the kneading portion and the first extruder of the foam sheet producing device, and the foaming process is performed by the second extruder of the foam sheet producing device. However, the present embodiment is not limited to such a configuration. For example, the regions where the kneading process and the foaming process are performed can be changed as appropriate.

- Foam Sheet -

As described above, a foam sheet can be obtained by the foam sheet producing step. Therefore, in the present embodiment, the term "foam sheet" refers to a product formed in a sheet shape by foaming the polylactic acid-containing composition. Further, the foam sheet is formed of the polylactic acid-containing composition, and thus, the foam sheet may be referred to as a "polylactic acid foam sheet", "foamed polylactic acid composition sheet", or the like. As will be described later, the foam sheet has good heat resistance and can be suitably used as a heat-resistant food container, for example.

The physical properties of the foam sheet are described below.

-- Crystallinity Degree A --

The crystallinity degree A of the foam sheet is 7.5% or less, and is preferably 3.8% or less. If the crystallinity degree A of the foam sheet exceeds 7.5%, the crystallization of the foam sheet proceeds at the start of the molding step described later. Therefore, the foam sheet does not easily flow during a heat-molding process described later, so that it is not possible to transfer the shape of the mold well, and the formability is poor. Further, internal stress remains, so that it is not possible to manufacture a container, or the container tends to shrink or deform when being exposed to hot water or used for cooking in a microwave oven, so that the heat resistance is poor. On the other hand, when the crystallinity degree A of the foam sheet is 7.5% or less, the crystallization of the foam sheet does not proceed during the heat-molding process described later, and the foam sheet flows easily during heat molding, so that the shape of the mold can be transferred well, and the formability is improved. Further, no internal stress remains and a container can be manufactured, and thus, the container does not easily shrink or deform when being exposed to hot water or used for cooking in a microwave oven, so that the heat resistance is improved. When the crystallinity degree A of the foam sheet is 3.8% or less, the formability and the heat resistance are further improved.

As described above, to set the crystallinity degree A of the foam sheet to 7.5% or less, the conditions in the foam sheet producing step may be appropriately selected, in particular, the temperature conditions of the foaming unit and the die are preferably selected.

In the present embodiment, the term "crystallinity" generally expresses the crystallinity degree and the crystallization speed, and the expression "the crystallinity is high" means that the crystallinity degree is high and/or the crystallization speed is fast.

The crystallinity of the foam sheet can be determined from a crystal melt peak area and a cold crystallization peak area. These areas are values determined by a differential scanning calorimetry (DSC) measurement conforming to JIS K 7122-1987 (Testing Methods for Heat of Transitions of Plastics).

Specifically, in the DSC measurement, for example, a differential scanning calorimeter device (for example, Q-2000 model, manufactured by TA Instruments) can be used. A sample of 5 mg to 10 mg cut from the foam sheet is placed in a container of the differential scanning calorimeter device and heated from 10°C to 200°C at a heating rate of 10°C/min. An area corresponding to an exothermic peak observed at about 80°C to 110°C when the temperature is raised is referred to as a "cold crystallization peak area", and an area corresponding to an endothermic peak at a higher temperature is defined as a "crystal melt peak area". From these peak area values, the crystallinity degree is determined by Calculation Formula (I) below.

$$\text{Crystallinity degree (\%)} = (\text{Crystal melt peak area value [J/g]} - \text{Cold crystallization}$$

$$\text{peak area value [J/g])/93 [J/g]} * 100 \, [\%] \dots \text{Calculation Formula (I)}$$

However, in a foam sheet in which crystallization is sufficiently progressed, the cold crystallization peak may not be observed, and in a foam sheet in which crystallization is not progressed, the crystal melt peak may not be observed.

-- Bulk Density--

The bulk density of the foam sheet is not particularly limited and may be appropriately selected according a purpose. However, the bulk density is preferably 0.063 $g/cm^3$ or more and 0.250 $g/cm^3$ or less, and more preferably 0.063 $g/cm^3$ or more and 0.125 $g/cm^3$ or less. When the bulk density of the foam sheet is 0.063 $g/cm^3$ or more and 0.250 $g/cm^3$ or less, the flexibility of the foam sheet increases, and the metal mold can be well transferred during heat molding, so that the moldability is improved. The bulk density of the foam sheet can be adjusted by changing the foaming ratio by adjusting the foaming temperature, the amount of the foaming agent, the type of the die, and the like when manufacturing the foam sheet. Specifically, methods such as lowering the foaming temperature when manufacturing the foam sheet, increasing the amount of the foaming agent, and using a circular die as the die can be used to increase the foaming ratio, so that the bulk density of the foam sheet can be reduced.

In the present embodiment, the bulk density of the foam sheet is a value measured as described below.

The foam sheet is kept during 24 hours or more in an environment adjusted to a temperature of 23°C and a relative humidity of 50%, and then, a test piece of 50 mm x 50 mm is cut from the foam sheet. The bulk density of the cut test piece is determined using an automatic hydrometer (for example, DSG-1, manufactured by Toyo Seiki Seisaku-sho, Ltd.) and using a method of weighing in a liquid. The weight (g) of the foam sheet in the atmosphere is precisely weighted, and then, the weight (g) of the foam sheet in water is precisely weighed, to calculate the bulk density by Calculation Formula (II) below.

$$\text{Bulk density [g/cm}^3\text{]} = \text{sample weight in air [g]}/\{(\text{sample weight in air [g]} - \text{weight}$$

$$\text{in liquid [g]}) * \text{liquid density [g/cm}^3\text{]}\} \dots \text{Calculation Formula (II)}$$

-- Cell Diameter (Median Diameter) --

The cell diameter of the foam sheet is not particularly limited and may be appropriately selected according a purpose, but the median diameter is preferably 800 μm or less, and more preferably 600 μm or less. When the cell diameter (the median diameter) of the foam sheet is 800 μm or less, convection in the cells is suppressed, and heat conduction is reduced, so that the temperature on an inner side and an outer side of the foam sheet is less likely to increase when the container contacts hot food or the like. Therefore, the container is prevented from shrinking and deforming, and the heat resistance is improved. The cell diameter (median diameter) can be adjusted by adjusting the amount of the foaming nucleating agent and the amount of the foaming agent. Specifically, by increasing the amounts of the foaming nucleating agent and the foaming agent, the number of starting points during foaming increases, and the diameter of each foam bubble decreases, so that it is possible to adjust the cell diameter (the median diameter) to 800 μm or less.

A method of measuring the cell diameter (median diameter) of the foam sheet is not particularly limited and may be appropriately selected according to a purpose. For example, the foam sheet is cut in a cross section by a sharp razor blade (for example, 76 razor, manufactured by Nisshin EM Co., Ltd.), and a scanning electron microscope (SEM) (for example, 3D Real Surface View microscope VE-9800, manufactured by KEYENCE Corp.) is used to observe the cross section of the foam sheet by SEM. The magnification is adjusted so that the number of bubbles in the observation range is several tens to several hundreds (for example, 50 times for a cell diameter of about 100 μm), to obtain an image suitable for the image analysis described later. If desired, a plurality of fields of view may be imaged and the images may be combined for image analysis.

The obtained image is segmented into regions by the watershed method (morphological segmentation) using the MorphoLibJ plugin of the image analysis software ImageJ (free software), for example. At this time, the tolerance is adjusted (for example, to 60 and the like) for each image so that the division is appropriate. A dividing line between regions is output as a binary image, and the particle diameter analysis function of the image analysis software is used to determine the distribution of the cell area. At this time, cells that contact an edge portion of the image are excluded from the analysis. The cumulative distribution of the cell area is created using table calculation software or the like, the area where the cumulative distribution is 50% is determined, and the equivalent circle diameter of the area is calculated and used as the cell diameter (median diameter).

-- Total Amount of Organic Matter and Amount of Inorganic Foaming Nucleating Material --

As described above, the organic matter in the polylactic acid-containing composition mainly includes the polylactic acid. However, examples of organic matter other than the polylactic acid include, but are not limited to, an organic nucleating material used as the foaming nucleating agent, and the chain extender.

The total amount of organic matter in the foam sheet can be estimated as an amount of matter other than ash (i.e., amount of inorganic components). The amount of ash can be considered as the amount of the inorganic nucleating material. The ash content corresponds to the residue after burning a sample at 600°C for 4 hours.

In the present embodiment, the ash content is measured as described below. The mass of a 100 mL crucible is precisely weighed to the fourth decimal place by a precision balance. About 3 g of a measurement sample of the foam sheet is weighed into the crucible, and the total mass of the crucible and the sample is precisely weighed. The crucible is placed in a muffle furnace (for example, a muffle furnace FP-310, manufactured by Yamato Scientific Co., Ltd.) and burned at 600°C for 4 hours to burn organic components. After that, the crucible is cooled in a desiccator for 1 hour, and the mass of the crucible is precisely weighed again to measure the total mass of the crucible and the ash. The amount of ash, that is, the amount of inorganic nucleating material, and the total amount of organic matter are calculated by Calculation Formula (III) and Calculation Formula (IV) below. The above-described measurement is performed at n = 2, average values thereof are determined, and the average values are respectively used as the total amount of organic matter and the amount of the inorganic foaming nucleating material.

Amount of inorganic nucleating material [mass%] = ash content [%] = (total mass of crucible and measurement sample after combustion and cooling [g] − mass of crucible [g])/(total mass of crucible and sample before combustion [g] − mass of crucible [g]) * 100 ... Calculation Formula (III)

Total amount of organic matter [%] = 100 − amount of ash [%] ... Calculation Formula (IV)

-- Average Thickness --

The average thickness of the foam sheet is not particularly limited and may be appropriately selected according to a purpose. However, the average thickness of the foam sheet is preferably 0.5 mm or more and 5 mm or less, more preferably 1.0 mm or more and 5 mm or less, and even more preferably 2.0 mm or more and 5 mm or less. When the average thickness of the foam sheet is 0.5 mm or more, the foam sheet retains its strength and does not shrink or deform even when softened in a high-temperature environment. When the average thickness of the foam sheet is 5 mm or less, the shape of the mold is easily transferred to the foam sheet, and the formability is improved.
In the present embodiment, the average thickness of the foam sheet is the arithmetic mean of thickness measurements at any 10 selected locations using a vernier caliper (for example, DIGIMATIC CALIPER, manufactured by Mitutoyo Corp.).

<Molding Step and Molding device>

The molding step is a step of molding the foam sheet with heat so that the difference (B - A) between the crystallinity degree A of the foam sheet and the crystallinity degree B of the molded body molded from the foam sheet is 20.0% or more and 40.0% or less.
The molding step preferably includes a heating process and a heat-molding process, and further includes other processes as desired.
The molding device is a device that molds the foam sheet with heat so that the difference (B - A) between the crystallinity degree A of the foam sheet and the crystallinity degree B of the molded body molded from the foam sheet is 20.0% or more and 40.0% or less.
The molding device preferably includes a heating portion and a heat-molding portion, and further includes other members as desired.

<<Heating Process and Heating Portion>>

The heating process is a process of heating and softening the polylactic acid foam sheet, before molding the polylactic acid foam sheet obtained in the foam sheet producing step.
The heating portion is a member that heats and softens the polylactic acid foam sheet, before molding the polylactic acid foam sheet obtained in the foam sheet producing device.
The heating process is suitably implemented by the heating portion.
In the heating process, the method for heating the polylactic acid foam sheet is not particularly limited and may be appropriately selected according a purpose. Examples of the method include, but are not limited to, a method of heating the polylactic acid foam sheet by placing a heating unit above and below the polylactic acid foam sheet, or on any one of an upper surface or a lower surface of the polylactic acid foam sheet.
The heating portion is not particularly limited, and may be appropriately selected from known heating members according to a purpose. Examples of the heating portion include, but are not limited to, electric heaters, heating plates, and infrared (IR) heaters.
In the heating process, from the viewpoint of improving the heat resistance, it is preferable that the crystallization of the polylactic acid does not proceed before molding the polylactic acid foam sheet and that the crystallization of the polylactic acid in the subsequent heat-molding process proceeds. Therefore, as the heating process, it is preferable to use a method in which the polylactic acid foam sheet can be heated in a short period of time, and particularly preferable, a method of heating the polylactic acid foam sheet by placing infrared (IR) heaters above and below the polylactic acid foam sheet.

The heating temperature of the polylactic acid foam sheet in the heating process is not particularly limited and may be appropriately selected according to a purpose. However, the heating temperature is preferably equal to or higher than the glass transition temperature of the polylactic acid, more preferably 60°C or higher, and even more preferably 80°C or higher. If the polylactic acid foam sheet is heated at a temperature near the cold crystallization temperature of the polylactic acid, the crystallization proceeds during the heating process. Therefore, the heating temperature of the polylactic acid foam sheet in the heating process is preferably 110°C or less as a maximum value. A lower limit value and an upper limit value of the heating temperature can be appropriately combined. However, the heating temperature of the polylactic acid in the heating process is more preferably 60°C or higher and 110°C or lower, and particularly preferably 80°C or higher and 110°C or lower.

The heating temperature refers to a temperature of the polylactic acid foam sheet.

Here, the glass transition temperature of the polylactic acid is determined by a differential scanning calorimetry (DSC) measurement conforming to JIS K 7122-1987 (Testing Methods for Heat of Transitions of Plastics).

Specifically, in the DSC measurement of the glass transition temperature of the polylactic acid, for example, a differential scanning calorimeter device (for example, Q-2000 model, manufactured by TA Instruments) can be used. A sample of 5 mg to 10 mg cut from the polylactic acid foam sheet is placed in a container of the differential scanning calorimeter device and heated from 10°C to 200°C at a heating rate of 10°C/min to measure the glass transition temperature. The glass transition temperature of the polylactic acid is generally within a range of 55°C to 70°C.

The cold crystallization temperature of the polylactic acid is determined by a differential scanning calorimetry (DSC) measurement conforming to JIS K 7122-1987 (Testing Methods for Heat of Transitions of Plastics).

Specifically, in the DSC measurement of the cold crystallization temperature of the polylactic acid, for example, a differential scanning calorimeter device (for example, Q-2000 model, manufactured by TA Instruments) can be used. A sample of 5 mg to 10 mg cut from the foam sheet is placed in a container of the differential scanning calorimeter device and heated from 10°C to 200°C at a heating rate of 10°C/min. In this case, the cold crystallization temperature of the polylactic acid refers to a peak top temperature of an exothermic peak observed in a temperature region equal to or higher than the glass transition point, and is generally within a range of 80°C to 110°C.

The heating time of the polylactic acid foam sheet in the heating process is not particularly limited and may be appropriately selected according a purpose. However, the heating time is preferably 15 seconds or less, more preferably 10 seconds or less, and still more preferably 5 seconds or less, so that the crystallization does not proceed too much.

«Heat-Molding Process»

The heat-molding process is a step of molding the polylactic acid foam sheet softened by the heating process, by using a mold, preferably a metal mold, and is preferably a step of shaping the polylactic acid foam sheet into the shape of a container.

A molding method using the mold is not particularly limited, and conventionally known heat-molding methods for thermoplastic resins can be used. Examples of the molding method include, but are not limited to, vacuum molding methods, pressure molding methods, vacuum pressure molding methods, and match mold molding methods. However, the match mold molding method is particularly preferable from the viewpoint of promoting the crystallization of the polylactic acid in the polylactic acid foam sheet during the molding process to improve the heat resistance.

The temperature of the mold in the heat-molding process is not particularly limited and may be appropriately selected according to a purpose. However, the temperature of the mold is preferably near the cold crystallization temperature of the polylactic acid, so that crystallization of the polylactic acid in the polylactic acid foam sheet proceeds. In the present embodiment, the expression "near the cold crystallization temperature of the polylactic acid" refers to a temperature +20°C or less higher than the cold crystallization temperature of the polylactic acid. Specifically, the temperature of the mold in the heat-molding process is preferably 100°C or higher and 130°C or lower, and more preferably 100°C or higher and 110°C or lower. If the temperature of the mold in the heat-molding process is near the cold crystallization temperature of the polylactic acid, it is possible to obtain a molded body in which the difference (B - A) between the crystallinity degree B of the molded body and the crystallinity degree A of the foam sheet is 20.0% or more and 40.0% or less.

A heat-molding time in the heat-molding process is not particularly limited and may be appropriately selected according to a purpose. However, it is preferable to ensure sufficient time for the polylactic acid foam sheet to crystallize, and thus, the heat-molding time is more preferably 5 seconds or longer, and even more preferably 7 seconds or longer. An upper limit value of the heat-molding time is not particularly limited, but is preferably 10 seconds or less from the viewpoint of heat resistance. A lower limit value and the upper limit value of the heat-molding time can be appropriately combined, and the heat-molding time is preferably 5 seconds or more and 10 seconds or less, and more preferably 7 seconds or more and 10 seconds or less.

The difference (B - A) between the crystallinity degree B of the molded body obtained in the molding step and the crystallinity degree A of the foam sheet is 20.0% or more and 40.0% or less, and more preferably 30.0% or more and 40.0% or less. If the difference (B - A) between the crystallinity degree B of the molded body and the crystallinity degree A of the foam sheet is less than 20.0% or more than 40.0%, the crystallization of the polylactic acid does not proceed significantly in the heat-molding process, and the shape of the obtained molded body is not fixed, so that the formability is poor. On the other hand, if the difference (B - A) between the crystallinity degree B of the molded body and the crystallinity degree A of the foam sheet is 20.0% or more and 40.0% or less, the crystallization of the polylactic acid proceeds significantly in the heat-molding process, and the shape of the obtained molded body is firmly fixed, so that the formability is improved. Further, the polylactic acid in the molded body after molding is highly crystallized, so that the molded body is less likely to shrink or deform when being exposed to high temperatures, and thus, the molded body has high the heat resistance. A molded body in which the difference (B - A) between the crystallinity degree B of the molded body and the crystallinity degree A of the foam sheet is 20.0% or more and 40.0% or less, can be achieved by optimizing the molding conditions and the molar ratio of any one among the D-isomer of lactic acid and the L-isomer of lactic acid, which are the constituent monomer units of the polylactic acid. If the difference (B - A) between the crystallinity degree B of the molded body and the crystallinity degree A of the foam sheet is 30.0% or more and 40.0% or less, the heat resistance is further improved.

<Other Steps and Other Units>

The other steps are not particularly limited and may be appropriately selected according to a purpose. Examples of the other steps include, but are not limited to, a releasing step of removing the molded body from the mold, a step of punching out the molded body from the polylactic acid foam sheet, a step of cutting off excess portions of the polylactic acid foam sheet other than the molded body, and a melt strength imparting step (melt tension imparting step) of imparting a melt strength suitable for foaming.

The other devices are not particularly limited and may be appropriately selected according to a purpose. Examples of the other devices include, but are not limited to, a releasing device that removes the molded body from the mold, a device that punches out the molded body from the polylactic acid foam sheet, a device that cuts off excess portions of the polylactic acid foam sheet other than the molded body, and a melt strength imparting device (melt tension imparting device) that imparts a melt strength suitable for foaming.

The other steps are suitably implemented by the other devices.

«Melt Strength Imparting Step and Melt Strength Imparting Device»

The melt strength imparting step is a step of imparting a melt strength suitable for foaming to the polylactic acid-containing composition.

The melt strength imparting device is a device that imparts a melt strength suitable for foaming to the polylactic acid-containing composition.

Examples of the method of imparting a melt strength suitable for foaming to the polylactic acid-containing composition include, but are not limited to, a method of dispersing a layered silicate, a fibrous foaming nucleating agent, and the like at the nano level, a method of cross-linking a polylactic acid-containing composition using a chain extender or a cross-linking auxiliary agent, a method of cross-linking a resin composition by using an electron beam or the like, a method of adding another resin composition having a high melt tension, and a method of lowering the foaming temperature.

- Molded Body -

In the present embodiment, the term "molded body" refers to a product obtained by using a mold to mold a foam sheet including the polylactic acid-containing composition.

The molded body has excellent formability and heat resistance, and thus, can be suitably used as a food container.

Further, the concept of the molded body includes not only a single molded product such as a food container, but also includes parts formed by a molded body such as a tray handle, and products including a molded body such as a tray to which a handle is attached.

-- Crystallinity Degree B --

The crystallinity degree B of the molded body is not particularly limited and may be appropriately selected according to a purpose, as long as the difference (B - A) between the crystallinity degree B of the molded body and the crystallinity degree A of the foam sheet is 20.0% or more and 40.0% or less. However, the crystallinity degree B of the molded body is preferably 23.8% or more and 47.5% or less, and more preferably 27.5% or more and 43.8% or less.

When the crystallinity degree B of the molded body is 23.8% or more and 47.5% or less, the shape of the molded body is firmly fixed and the formability is improved.

Further, even if the molded body is exposed to high temperatures, the molded body is less likely to shrink or deform, and thus has excellent heat resistance.

As described above, the crystallinity degree B of the molded body can be achieved by appropriately selecting the conditions in the molding step.

The crystallinity of the molded body can be determined from the crystal melt peak area and the cold crystallization peak area. These areas are values determined by a differential scanning calorimetry (DSC) measurement conforming to JIS K 7122-1987 (Testing Methods for Heat of Transitions of Plastics). The DSC measurement may be performed by a method similar to the measurement of the crystallinity degree A of the foam sheet, except that the measurement sample is changed from a sample of 5 mg to 10 mg cut from the foam sheet in the measurement of the crystallinity degree A of the foam sheet, to a sample of 5 mg to 10 mg cut from the molded body.

The method of manufacturing a molded body and the apparatus for manufacturing a molded body according to the present embodiment may be used to manufacture a molded body having excellent formability and heat resistance, and in particular, may be particularly suitably used to manufacture a container having a deep draw (deep-drawn container) in which the depth of the container is longer than the diameter (aperture) of the container.

In the present embodiment, the term "formability" refers to the ability of transferring the shape of the mold to the molded body obtained in the molding step, without breaking the molded body or generating wrinkles in the molded body. If the molded body is a container, the formability of the container can be evaluated by comparing the shape of the mold and the shape of the container, for example. It is preferable that the formability of the container is such that the container does not break and is free from wrinkles, and that the depth of the container is 95% or more with respect to the depth of the mold.

In the present embodiment, the term "heat resistance" means that the molded body does not shrink or deform when being heated. If the molded body is a container, the heat resistance of the container may be evaluated by calculating the volume change rate from the volume in the container before heating (initial volume) and the volume in the container after heating (volume after heating), using Calculation Formula (V) below. The volume change rate of the molded body is preferably less than 6%, more preferably less than 4%, and even more preferably less than 2%.

$$\text{Volume change rate (\%)} = (\text{initial volume} - \text{volume after heating})/\text{initial volume} * 100 \dots \text{Calculation Formula (V)}$$

[Examples]

The present embodiment will be described in further detail below with reference to Examples and Comparative Examples, but the present embodiment is in not limited to these Examples. In the Examples and Comparative Examples described below, unless otherwise specified, the term "parts" refers to "parts by mass" and the term "%" refers to "mass%", except for values in evaluation criteria.

(Example 1)

<Preparation of Foam Sheet Molded Body>

- Preparation of Polylactic Acid Resin Composition -

97.7 parts of polylactic acid resin (REVODE 190, manufactured by HISUN), 1.0 parts of inorganic particles as a foaming nucleating agent (hydrophobic fumed silica, AEROSIL (registered trademark) RY 300, manufactured by Nippon Aerosil Co., Ltd.), and 1.3 parts of a chain extender (JONCRYL (registered trademark)

ADR 4468, manufactured by BASF) were mixed to obtain a polylactic acid resin composition.

- Production of Foam Sheet -

A tandem type continuous foam sheet producing device 110 illustrated in FIG. 2 was used to supply the polylactic acid resin composition to the raw material mixing and melting portion a of a first extruder 10 at a flow rate of 20 kg/hour. Next, carbon dioxide as a compressible fluid was supplied to the compressible fluid supply portion b of the first extruder 10 at 0.82 kg/hour (that is, equivalent to 4.1 parts of carbon dioxide per 100 parts of the polylactic acid resin composition). Subsequently, the components were mixed, melted, and kneaded in the kneading portion c and supplied to a second extruder 20.

Next, the polylactic acid resin composition was cooled in the foaming portion f of the second extruder 20 until the resin temperature was 160°C, and the polylactic acid resin composition was extruded and foamed by discharging the polylactic acid resin composition into the atmosphere from a circular die that was attached to a tip end of the second extruder and had a slit diameter of 70 mm and a gap of 0.5 mm. The foam sheet 4 that was obtained as a tubular polylactic acid resin, was placed on the cooled mandrel 5, and forcedly cooled by blowing air onto the outer surface of the foam sheet 4. The sheet was cut and opened by a rotary blade cutter to obtain a foam body having the shape of a flat sheet.

In Example 1, the temperature of each portion was as follows.

- Raw material mixing and melting portion a of first extruder 10: 200°C
- Compressible fluid supply portion b of first extruder 10: 200°C
- Kneading portion c of first extruder 10: 200°C
- Foaming portion f of second extruder 20: cooled from 180°C to 160°C
- Circular die: 160°C

In Example 1, the pressure of each portion was as follows.

- Compressible fluid supply portion b of first extruder 10: 7 MPa to 10 MPa
- Kneading portion c of first extruder 10: 8 MPa to 20 MPa
- Foaming portion f of second extruder 20: 8 MPa to 35 MPa

- Production of Molded Body -

A match mold type molding machine including upper and lower infrared (IR) heaters and a mold, and a metal mold by which it is possible to mold a deep-drawn container having a depth of 60 mm and including an opening portion with a diameter of 180 mm and a bottom portion with a diameter of 110 mm, were used to heat-mold a container for cup fried noodles, and thus, a molded body of Example 1 was obtained.

Specifically, as a heating step, the foam sheet was heated to a temperature of 80°C using the upper and lower IR heaters, and the foam sheet was heated for 4.5 seconds. Immediately after that, as a heat-molding step, the foam sheet was molded by vacuum molding for 10 seconds using a heated metal mold heated to 110°C in a match mold method.

(Examples 2 and 3)

A method similar to Example 1 was used to prepare a polylactic acid resin composition, produce a foam sheet, and produce a molded body, except that the manufacturing conditions of the molded body in Example 1 were changed to the conditions presented in Table 1 below, to obtain molded bodies of Examples 2 and 3.

(Example 4)

A method similar to Example 1 was used to prepare a polylactic acid resin composition, produce a foam sheet, and produce a molded body, except that the manufacturing conditions of the foam sheet in Example 1 were changed to the conditions presented in Table 1 below, to obtain a molded body of Example 4.

(Example 5)

A method similar to Example 1 was used to prepare a polylactic acid resin composition, produce a foam sheet, and produce a molded body, except that the formulation of the polylactic acid resin composition, the manufacturing conditions of the foam sheet, and the manufacturing conditions of the molded body in Example 1 were changed to the conditions presented in Table 2 below, to obtain a molded body of Example 5.

Hydrophobic fumed silica (AEROSIL (registered trademark) R 972, manufactured by Nippon Aerosil Co., Ltd.) was used as the inorganic particles forming the foaming nucleating agent in Example 5, and a T-die having a width of 400 mm was used as the T-die at the tip end of the second extruder.

(Examples 6 and 7)

A method similar to Example 1 was used to prepare a polylactic acid resin composition, produce a foam sheet, and produce a molded body, except that the manufacturing conditions of the foam sheet and the manufacturing conditions of the molded body in Example 1 were changed to the conditions presented in Table 2 below, to obtain molded bodies of Examples 6 and 7.

(Comparative Example 1)

A method similar to Example 1 was used to prepare a polylactic acid resin composition, produce a foam sheet, and produce a molded body, except that the formulation of the polylactic acid resin composition, the manufacturing conditions of the foam sheet, and the manufacturing conditions of the molded body in Example 1 were changed to the conditions presented in Table 3 below, to obtain a molded body of Comparative Example 1.

(Comparative Example 2)

A method similar to Example 5 was used to prepare a polylactic acid resin composition, produce a foam sheet, and produce a molded body, except that the manufacturing conditions of the molded body in Example 5 were changed to the conditions presented in Table 3 below, to obtain a molded body of Comparative Example 2.

(Comparative Example 3)

A method similar to Example 1 was used to prepare a polylactic acid resin composition, produce a foam sheet, and produce a molded body, except that the formulation of the polylactic acid resin composition, the manufacturing conditions of the foam sheet, and the manufacturing conditions of the molded body in Example 1 were changed to the conditions presented in Table 3 below, to obtain a molded body of Comparative Example 3.
REVODE 110 (manufactured by HISUN) was used as the polylactic acid resin of Comparative Example 3.

<Measurement of Crystallinity Degree of Foam Sheet and Molded Body>

In accordance with JIS K 7122-1987 (Testing Methods for Heat of Transitions of Plastics), the crystal melt peak area values and the cold crystallization peak area values of the foam sheets and the molded bodies of Examples 1 to 7 and Comparative Examples 1 to 3 were determined.
The DSC measurement was performed using a differential scanning calorimeter device Q-2000 model (manufactured by TA Instruments) under the following measurement conditions. An area corresponding to an exothermic peak observed at about 80°C to 110°C when the temperature is raised is referred to as a "cold crystallization peak area", and an area corresponding to an endothermic peak at a higher temperature is defined as a "crystal melt peak area". The crystallinity degree was calculated using Calculation Formula (I) below. The results are presented in Tables 1 to 3 below.

[Measurement Conditions]

- Sample amount: 5 mg to 10 mg
- Measurement temperature range: 10°C to 200°C
- Heating rate: 10°C/minute
- Purge gas: Nitrogen
- Purge gas flow rate: 50 mL/minute

$$\text{Crystallinity degree (\%)} = (\text{Crystal melt peak area value [J/g]} - \text{Cold crystallization peak area value [J/g]})/93 \text{ [J/g]} * 100 \text{ [\%]} \dots \text{Calculation Formula (I)}$$

<Measurement of Bulk Density of Foam Sheet>

The foam sheets of Examples 1 to 7 and Comparative Examples 1 to 3 were kept during 24 hours or more in an environment adjusted to a temperature of 23°C and a relative humidity of 50%, and then, test pieces of 50 mm x 50 mm were cut from the foam sheets. The bulk density of the cut test pieces was determined using an automatic hydrometer (DSG-1, manufactured by Toyo Seiki Seisaku-sho, Ltd.) and using a method of weighing in a liquid. In the method of weighing in a liquid, the weight (g) of the foam sheet in the atmosphere was precisely weighted, and then, the weight (g) of the foam sheet in water was precisely weighed, to calculate the bulk density by Calculation Formula (II) below. The results are presented in Tables 1 to 3 below.

$$\text{Bulk density [g/cm}^3] = \text{sample weight in air [g]}/\{(\text{sample weight in air [g]} - \text{weight}$$

$$\text{in liquid [g]}) * \text{liquid density [g/cm}^3]\} \text{ ... Calculation Formula (II)}$$

<Measurement of Average Thickness of Foam Sheet>

The thickness of the foam sheets of Examples 1 to 7 and Comparative Examples 1 to 3 was measured at any 10 selected locations using a vernier caliper (DIGIMATIC CALIPER, manufactured by Mitutoyo Corporation). The arithmetic mean value of the measured values of the thickness at these 10 locations was calculated and used as the average thickness. The results are presented in Tables 1 to 3 below.

<Measurement of Cell Diameter (Median Diameter) of Foam Sheet>

The foam sheets of Examples 1 to 7 and Comparative Examples 1 to 3 were cut in a cross section by a sharp razor blade (76 razor, manufactured by Nisshin EM Co., Ltd.), and a scanning electron microscope (SEM) (3D Real Surface View microscope VE-9800, manufactured by KEYENCE Corp.) was used to observe the cross section of the foam sheets by SEM at a magnification of 20 to 50 times. The obtained images were segmented into regions by the watershed method (morphological segmentation) using the MorphoLibJ plugin of the image analysis software ImageJ (free software). At this time, the tolerance was adjusted for each image so that an appropriate division was obtained. A dividing line between regions was output as a binary image, and while excluding cells that contact an edge portion of the image were excluded from the analysis, the distribution of the cell area was obtained by the particle diameter analysis function of the image analysis software. The cumulative distribution of the cell area was created using table calculation software (Excel, manufactured by Microsoft Corp.), the area where the cumulative distribution is 50% was determined, and the equivalent circle diameter of the area was calculated and used as the cell diameter (median diameter). The results are presented in Tables 1 to 3 below.

<Measurement of Molar Ratio of D-isomer of Lactic Acid and L-isomer of Lactic Acid Included in Polylactic Acid Resin in Foam Sheet>

The foam sheets of Examples 1 to 7 and Comparative Examples 1 to 3 were pulverized in a frozen state, 200 mg of the frozen and pulverized powder of each of the foam sheets was weighed into an Erlenmeyer flask using a precision balance, and 30 mL of an aqueous 1 N sodium hydroxide solution was added. Next, the Erlenmeyer flask was heated to 65°C while being shaken to completely dissolve the polylactic acid resin. Subsequently, 1 N hydrochloric acid was used to adjust the pH to 7, and a volumetric flask was used to dilute the mixture to a predetermined volume to obtain a polylactic acid resin solution. Next, the polylactic acid resin solution was filtered through a 0.45 μm membrane filter and then, analyzed by liquid chromatography under the following measurement conditions.
Based on the obtained chart, from a peak area originating from the D-isomer of lactic acid, a peak area originating from the L-isomer of lactic acid, and the total area of these peak areas, a peak area ratio originating from the D-isomer of lactic acid and a peak area ratio originating from the L-isomer of lactic acid were calculated. The results were used as the abundance ratios to calculate a quantitative ratio of the D-isomer and a quantitative ratio of the L-isomer. The arithmetic mean values of the results obtained by performing the above-described operation three times were defined as the amount of the D-isomer of lactic acid and the amount of the L-isomer of lactic acid included in the polylactic acid resin in the foam sheets. The results are presented in Tables 1 to 3 below as "molar ratio (L-isomer: D-isomer)".

[Measurement Device and Measurement Conditions for LC-MS]

- HPLC device (liquid chromatograph): PU-2085 PLUS type system (manufactured by JASCO Corporation)
- Column: CHROMOLITH (registered trademark) coated with SUMICHIRAL OA-5000 (inner diameter of 4.6 mm, length of 250 mm) (manufactured by Sumitomo Analysis Center Co., Ltd.)
- Temperature of column: 25°C
- Mobile phase: 2 mM mixed solution of $CuSO_4$ aqueous solution with 2-propanol ($CuSO_4$ aqueous solution: 2-propanol (volume ratio) = 95: 5)

- Flow rate of mobile phase: 1.0 mL/min
- Detector: UV 254 nm
- Injection volume: 20 µL

<Measurement of Crystallization Temperature of Polylactic Acid Resin in Foam Sheet>

The crystallization temperature of the polylactic acid resin in the foam sheets of Examples 1 to 7 and Comparative Examples 1 to 3 was determined by a differential scanning calorimetry (DSC) measurement conforming to JIS K 7122-1987 (Testing Methods for Heat of Transitions of Plastics).

Specifically, a sample of 5 mg to 10 mg cut from each of the foam sheets was placed in a container of a differential scanning calorimeter device (Q-2000 type, manufactured by TA Instruments) and heated from 10°C to 200°C at a heating rate of 10°C/min, the temperature was maintained for 10 minutes, and then lowered from 200°C to 10°C at a rate of 10°C/min. At this time, the peak top temperature of the exothermic peak was measured as the crystallization temperature of polylactic acid. The results are presented in Tables 1 to 3 below. In Tables 1 to 3 below, "unclear" indicates that the crystallization peak was not clearly visible.

<Measurement of Glass Transition Temperature of Polylactic Acid Resin in Foam Sheet>

The crystallization temperature of the polylactic acid resin in the foam sheets of Examples 1 to 7 and Comparative Examples 1 to 3 was determined by a differential scanning calorimetry (DSC) measurement conforming to JIS K 7122-1987 (Testing Methods for Heat of Transitions of Plastics).

Specifically, a sample of 5 mg to 10 mg cut from each of the foam sheets was placed in a container of a differential scanning calorimeter device (Q-2000 type, manufactured by TA Instruments) and heated from 10°C to 200°C at a heating rate of 10°C/min to measure the glass transition temperature of the polylactic acid. The results are presented in Tables 1 to 3 below.

<Measurement of Cold Crystallization Temperature of Polylactic Acid Resin in Foam Sheet>

The crystallization temperature of the polylactic acid resin in the foam sheets of Examples 1 to 7 and Comparative Examples 1 to 3 was determined by a differential scanning calorimetry (DSC) measurement conforming to JIS K 7122-1987 (Testing Methods for Heat of Transitions of Plastics).

Specifically, a sample of 5 mg to 10 mg cut from each of the foam sheets was placed in a container of a differential scanning calorimeter device (Q-2000 type, manufactured by TA Instruments) and heated from 10°C to 200°C at a heating rate of 10°C/min. At this time, the peak top temperature of the exothermic peak observed in a temperature region above the glass transition point was measured as the cold crystallization temperature of the polylactic acid. The results are presented in Tables 1 to 3 below.

[Evaluation]

<Moldability of Deep-drawn Container>

The molded bodies of Examples 1 to 7 and Comparative Examples 1 to 3 were observed, and the moldability was evaluated, based on the following evaluation criteria. In the evaluation results, the best value is 5, and the allowable range includes values of 3 or more.

- Evaluation Criteria -

5: The molded body is not broken or wrinkled, and the shape of the metal mold is transferred well, including corners portions and the like
4: The molded body is not broken or wrinkled, but shapes such as the corner portions are slightly rounded and the shaping is slightly reduced
3: The molded body is not broken or wrinkled, but the depth of the molded body (container for cup fried noodles) is 95% or more and less than 100% of the depth of the metal mold.
2: A broken part can be confirmed, or the depth of the molded body (container for cup fried noodles) is less than 95% of the depth of the metal mold
1: The molded body is significantly broken

<Heat Resistance of Deep-drawn Container>

Water having a temperature of 25°C was added to level an opening portion of the molded bodies (container for cup fried noodles) of Examples 1 to 7 and Comparative Examples 1 to 3, and the mass of the water filled into the molded body was measured. A value obtained by converting the mass into the volume at the density of water at 25°C was defined as an "initial volume" of the molded body.

Subsequently, the molded bodies of Examples 1 to 7 and Comparative Examples 1 to 3 were heated to 120°C for 10 minutes, and then, water having a temperature of 25°C was added to level the opening portion of the molded body and the mass of the water filled into the molded body was measured. A value obtained by converting the mass into the volume at the density of water at 25°C was defined as "volume after heating" of the molded body.

The volume change rate of the molded body before and after heating was calculated by Calculation Formula (V) below, and this volume change rate was used as an indicator of the heat resistance of the molded body to evaluate the molded body, based on the following evaluation criteria. In the evaluation results, the best value is 5, and the allowable range includes values of 3 or more.

$$\text{Volume change rate (\%)} = (\text{initial volume} - \text{volume after heating})/\text{initial volume} * 100 \ldots \text{Calculation Formula (V)}$$

- Evaluation Criteria -

5: Volume change rate of less than 2%
4: Volume change rate of 2% or more and less than 4%
3: Volume change rate of 4% or more and less than 6%
2: Volume change rate of 6% or more and less than 10%
1: Volume change rate of 10% or more, or deformation to an extent at which the original shape cannot be recognized

Table 1

| | | | Example 1 | Example 2 | Example 3 | Example 4 |
|---|---|---|---|---|---|---|
| Polylactic acid resin composition formulation [parts by mass] | PLA resin | REVODE 190 | 97.7 | 97.7 | 97.7 | 97.7 |
| | | REVODE 110 | - | - | - | - |
| | Chain extender | JONCRYL (registered trademark) ADR 4468 | 1.3 | 1.3 | 1.3 | 1.3 |
| | Foaming nucleating agent | AEROSIL (registered trademark) RY 300 | 1.0 | 1.0 | 1.0 | 1.0 |
| | | AEROSIL (registered trademark) R-972 | - | - | - | - |

(continued)

| | | | | Example 1 | Example 2 | Example 3 | Example 4 |
|---|---|---|---|---|---|---|---|
| Foam sheet producing step | First extruder | Polylactic acid-containing composition: Carbon dioxide (compressible fluid) [mass ratio] | | 100: 4.1 | 100: 4.1 | 100: 4.1 | 100: 6.5 |
| | | Raw material mixture and melting portion a | Temperature [°C] | 200 | 200 | 200 | 200 |
| | | Compressible fluid supply portion b | Temperature [°C] | 200 | 200 | 200 | 200 |
| | | | Pressure [MPa] | 7 to 10 | 7 to 10 | 7 to 10 | 7 to 10 |
| | | Kneading portion c | Temperature [°C] | 200 | 200 | 200 | 200 |
| | | | Pressure [MPa] | 8 to 20 | 8 to 20 | 8 to 20 | 8 to 20 |
| | Second extruder | Foaming portion f | Temperature [°C] | 180 -> 160 | 180 -> 160 | 180 -> 160 | 180 -> 160 |
| | | | Pressure [MPa] | 8 to 35 | 8 to 35 | 8 to 35 | 8 to 35 |
| | Die | Type | | Circular die | Circular die | Circular die | Circular die |
| | | Temperature [°C] | | 160 | 160 | 160 | 155 |
| Molding step | Heating process | Temperature of foam sheet [°C] | | 80 | 80 | 80 | 80 |
| | | Time [seconds] | | 4.5 | 4.5 | 4.5 | 4.5 |
| | Heat-molding process | Method | | Match mold | Match mold | Match mold | Match mold |
| | | Temperature of metal mold [°C] | | 110 | 110 | 110 | 110 |
| | | Time [seconds] | | 10.0 | 7.0 | 5.0 | 10.0 |
| Physical properties | Polylactic acid | Molar ratio (L-isomer: D-isomer) [mol%] | | 99.5: 0.5 | 99.5: 0.5 | 99.5: 0.5 | 99.5: 0.5 |
| | | Melting point [°C] | | 168 | 168 | 168 | 168 |
| | | Crystallization temperature [°C] | | 145 | 145 | 145 | 145 |
| | | Glass transition temperature [°C] | | 61 | 61 | 61 | 61 |

(continued)

| | | | Example 1 | Example 2 | Example 3 | Example 4 |
|---|---|---|---|---|---|---|
| | Foam sheet | Cold crystallization temperature [°C] | 85 | 85 | 85 | 85 |
| | | Crystallinity degree A [%] | 2.1 | 2.1 | 2.1 | 6.8 |
| | | Bulk Density [g/cm$^3$] | 0.104 | 0.104 | 0.104 | 0.072 |
| | | Average thickness [mm] | 1.80 | 1.80 | 1.80 | 2.30 |
| | | Cell diameter (median) [μm] | 220 | 220 | 220 | 150 |
| | Molded body | Crystallinity degree B [%] | 38.3 | 33.3 | 28.8 | 37.3 |
| | Difference in crystallinity degree (B - A) [%] | | 36.2 | 31.2 | 26.7 | 30.5 |
| Evaluation results | Moldability of deep-drawn container | | 5 | 5 | 5 | 4 |
| | Heat resistance of deep-drawn container | | 5 | 5 | 4 | 4 |

Table 2

| | | | Example 5 | Example 6 | Example 7 |
|---|---|---|---|---|---|
| Polylactic acid resin composition formulation [parts by mass] | PLA resin | REVODE 190 | 97.7 | 97.7 | 97.7 |
| | | REVODE 110 | - | - | - |
| | Chain extender | JONCRYL (registered trademark) ADR 4468 | 1.3 | 1.3 | 1.3 |
| | Foaming nucleating agent | AEROSIL (registered trademark) RY 300 | - | 1.0 | 1.0 |
| | | AEROSIL (registered trademark) R-972 | 0.5 | - | - |

(continued)

| | | | Example 5 | Example 6 | Example 7 |
|---|---|---|---|---|---|
| Foam sheet producing step | First extruder | Polylactic acid-containing composition: Carbon dioxide (compressible fluid) [mass ratio] | 100: 5.5 | 100: 3.6 | 100: 3.2 |
| | | Raw material mixture and melting portion a — Temperature [°C] | 180 | 200 | 200 |
| | | Compressible fluid supply portion b — Temperature [°C] | 180 | 200 | 200 |
| | | Compressible fluid supply portion b — Pressure [MPa] | 7 to 10 | 7 to 10 | 7 to 10 |
| | | Kneading portion c — Temperature [°C] | 180 | 200 | 200 |
| | | Kneading portion c — Pressure [MPa] | 8 to 20 | 8 to 20 | 8 to 20 |
| | Second extruder | Foaming portion f — Temperature [°C] | 180 -> 160 | 180 -> 160 | 180 -> 160 |
| | | Foaming portion f — Pressure [MPa] | 8 to 35 | 8 to 35 | 8 to 35 |
| | Die | Type | T-die | Circular die | Circular die |
| | | Temperature [°C] | 155 | 157 | 157 |
| Molding step | Heating process | Temperature of foam sheet [°C] | 100 | 80 | 80 |
| | | Time [seconds] | 8.4 | 8.4 | 8.4 |
| | Heat-molding process | Method | Match mold | Match mold | Match mold |
| | | Temperature of metal mold [°C] | 110 | 110 | 110 |
| | | Time [seconds] | 15.0 | 10.0 | 10.0 |
| Physical properties | Polylactic acid | Molar ratio (L-isomer: D-isomer) [mol%] | 99.5: 0.5 | 99.5: 0.5 | 99.5: 0.5 |
| | | Melting point [°C] | 168 | 168 | 168 |

(continued)

| | | | Example 5 | Example 6 | Example 7 |
|---|---|---|---|---|---|
| | | Crystallization temperature [°C] | 145 | 145 | 145 |
| | | Glass transition temperature [°C] | 61 | 61 | 61 |
| | | Cold crystallization temperature [°C] | 85 | 85 | 85 |
| | Foam sheet | Crystallinity degree A [%] | 7.4 | 4.1 | 4.7 |
| | | Bulk Density [g/cm$^3$] | 0.558 | 0.133 | 0.118 |
| | | Average thickness [mm] | 1.50 | 2.91 | 3.19 |
| | | Cell diameter (median) [μm] | 180 | 780 | 880 |
| | Molded body | Crystallinity degree B [%] | 31.0 | 36.6 | 35.1 |
| | Difference in crystallinity degree (B - A) [%] | | 23.6 | 32.5 | 30.4 |
| Evaluation results | Moldability of deep-drawn container | | 3 | 4 | 4 |
| | Heat resistance of deep-drawn container | | 3 | 4 | 3 |

Table 3

| | | | Comparative Example 1 | Comparative Example 2 | Comparative Example 3 |
|---|---|---|---|---|---|
| Polylactic acid resin composition formulation [parts by mass] | PLA resin | REVODE 190 | 97.7 | 97.7 | - |
| | | REVODE 110 | - | - | 97.7 |
| | Chain extender | JONCRYL (registered trademark) ADR 4468 | 1.3 | 1.3 | 1.3 |
| | Foaming nucleating agent | AEROSIL (registered trademark) RY 300 | - | - | - |
| | | AEROSIL (registered trademark) R-972 | - | 0.5 | 0.5 |

(continued)

| | | | Comparative Example 1 | Comparative Example 2 | Comparative Example 3 |
|---|---|---|---|---|---|
| Foam sheet producing step | First extruder | Polylactic acid-containing composition: Carbon dioxide (compressible fluid) [mass ratio] | 100: 6.5 | 100: 5.5 | 100: 7.3 |
| | | Raw material mixture and melting portion a | Temperature [°C] | 200 | 180 | 200 |
| | | Compressible fluid supply portion b | Temperature [°C] | 200 | 180 | 200 |
| | | | Pressure [MPa] | 7 to 10 | 7 to 10 | 7 to 10 |
| | | Kneading portion c | Temperature [°C] | 200 | 180 | 200 |
| | | | Pressure [MPa] | 8 to 20 | 8 to 20 | 8 to 20 |
| | Second extruder | Foaming portion f | Temperature [°C] | 180 -> 160 | 180 -> 160 | 180 -> 160 |
| | | | Pressure [MPa] | 8 to 35 | 8 to 35 | 8 to 35 |
| | Die | Type | | Circular die | T-die | Circular die |
| | | Temperature [°C] | | 150 | 155 | 145 |
| Molding step | Heating process | Temperature of foam sheet [°C] | | 80 | 80 | 80 |
| | | Time [seconds] | | 4.6 | 8.4 | 12.1 |
| | Heat-molding process | Method | | Match mold | Match mold | Match mold |
| | | Temperature of metal mold [°C] | | 110 | 110 | 110 |
| | | Time [seconds] | | 10.0 | 7.5 | 10.0 |
| Physical properties | Polylactic acid | Molar ratio (L-isomer: D-isomer) [mol%] | | 99.5: 0.5 | 99.5: 0.5 | 96.2: 3.8 |
| | | Melting point [°C] | | 168 | 168 | 160 |

(continued)

|  |  |  | Comparative Example 1 | Comparative Example 2 | Comparative Example 3 |
|---|---|---|---|---|---|
|  |  | Crystallization temperature [°C] | 145 | 145 | unclear |
|  |  | Glass transition temperature [°C] | 61 | 61 | 62 |
|  |  | Cold crystallization temperature [°C] | 85 | 85 | 81 |
|  | Foam sheet | Crystallinity degree A [%] | 13.1 | 7.4 | 3.2 |
|  |  | Bulk Density [g/cm$^3$] | 0.069 | 0.558 | 0.358 |
|  |  | Average thickness [mm] | 2.80 | 1.50 | 1.82 |
|  |  | Cell diameter (median) [μm] | 110 | 180 | 100 |
|  | Molded body | Crystallinity degree B [%] | 38.3 | 23.1 | 18.9 |
|  | Difference in crystallinity degree (B - A) [%] | | 25.2 | 15.7 | 15.7 |
| Evaluation results | Moldability of deep-drawn container | | 2 | 1 | 1 |
|  | Heat resistance of deep-drawn container | | 1 | 1 | 1 |

Examples of aspects of the present embodiment include, but are not limited to, the following aspects.

According to a first aspect, a method of manufacturing a molded body includes a producing a foam sheet having a crystallinity degree A of 7.5% or less by using a composition containing polylactic acid comprising 98 mol% or more of any one among a D-isomer of lactic acid and an L-isomer of lactic acid as a constituent monomer unit, and molding the foam sheet with heat to produce a molded body having a crystallinity degree B, a difference (B - A) between the crystallinity degree A of the foam sheet and the crystallinity degree B of the molded body being 20.0% or more and 40.0% or less.

According to a second aspect, in the method according to the first aspect, the crystallinity degree A of the foam sheet is 3.8% or less.

According to a third aspect, in the method according to any one of the first aspect and the second aspect, the difference (B - A) between the crystallinity degree A of the foam sheet and the crystallinity degree B of the molded body is 30.0% or more and 40.0% or less.

According to a fourth aspect, in the method according to any one of the first to third aspects, the foam sheet has a bulk density of 0.063 g/cm$^3$ or more and 0.250 g/cm$^3$ or less.

According to a fifth aspect, in the method according to any one of the first to fourth aspects, the foam sheet has a foam cell diameter of 800 μm or less as a median diameter.

According to a sixth aspect, in the method according to any one of the first to fifth aspects, the producing includes:

kneading the polylactic acid and a foaming nucleating agent at a temperature equal to or higher than a melting point of the polylactic acid in the presence of a compressible fluid, to obtain the composition containing the polylactic acid, and

foaming the composition containing the polylactic acid at a temperature equal to or higher than a crystallization temperature of the polylactic acid when removing the compressible fluid from the composition containing the polylactic

28

acid, to obtain a foam sheet.

According to a seventh aspect, in the method according to the sixth aspect, the temperature equal to or higher than the melting point of the polylactic acid is +10°C or more and +35°C or less higher than the melting point of the polylactic acid.

According to an eighth aspect, in the method according to any one of the sixth aspect and the seventh aspect, the temperature equal to or higher than the crystallization temperature of the polylactic acid is +10°C or more and +20°C or less higher than a cold crystallization temperature of the polylactic acid.

According to a ninth aspect, in the method according to any one of the sixth to eighth aspects, in the foaming, the foamed composition containing the polylactic acid is extruded with a circular die to obtain the foam sheet.

According to a tenth aspect, in the method according to any one of the sixth to ninth aspects, in the kneading, 2 parts by mass or more and 7 parts by mass or less of the compressible fluid are supplied to 100 parts by mass of the composition containing the polylactic acid.

According to an eleventh aspect, in the method according to any one of the first to tenth aspects, the molding includes:

heating the foam sheet at a temperature equal to or higher than a glass transition temperature of the polylactic acid, and

heat-molding the foam sheet after the heating, by using a mold, while heating the foam sheet at a temperature near the cold crystallization temperature of the polylactic acid.

According to a twelfth aspect, in the method according to the eleventh aspect, the heating is performed at 60°C or higher and 110°C or lower for 15 seconds or less.

According to a thirteenth aspect, in the method according to any one of the eleventh aspect and the twelfth aspect, the temperature near the cold crystallization temperature of the polylactic acid is +20°C or less higher than the cold crystallization temperature of the polylactic acid.

According to a fourteenth aspect, in the method according to any one of the eleventh to thirteenth aspects, the heat-molding is performed at 100°C or higher and 130°C or lower for 5 seconds or longer.

According to a fifteenth aspect, in the method according to any one of the first to fourteenth aspects, the molded body is a deep-drawn container.

According to a sixteenth aspect, in the method according to any one of the first to fifteenth aspects, the composition containing the polylactic acid further contains a foaming nucleating material and a chain extender.

According to a seventeenth aspect, in the method according to the sixteenth aspect, the foaming nucleating material is at least any one of silica, titanium oxide, and a layered silicate.

According to an eighteenth aspect, in the method according to any one of the sixteenth aspect and the seventeenth aspect, the chain extender is at least any one of an epoxy-based chain extender and an isocyanate-based chain extender.

According to a nineteenth aspect, an apparatus for manufacturing a molded body includes a foam sheet producing device to produce a foam sheet having a crystallinity degree A of 7.5% or less by using a composition containing polylactic acid comprising 98 mol% or more of any one among a D-isomer of lactic acid and an L-isomer of lactic acid as a constituent monomer unit, and

a molding device to mold the foam sheet with heat to produce a molded body having a crystallinity degree B, a difference (B - A) between the crystallinity degree A of the foam sheet and the crystallinity degree B of the molded body being 20.0% or more and 40.0% or less.

According to the method of manufacturing a molded body according to any one of the first to eighteenth aspects and the apparatus for manufacturing a molded body according to the nineteenth aspect, it is possible to solve the problems in the related art and achieve the object of the present embodiment.

Any one of the above-described operations may be performed in various other ways, for example, in an order different from the one described above.

## Claims

1. A method of manufacturing a molded body, the method comprising:

producing a foam sheet having a crystallinity degree A of 7.5% or less by using a composition containing polylactic acid comprising 98 mol% or more of any one among a D-isomer of lactic acid and an L-isomer of lactic acid as a constituent monomer unit; and

molding the foam sheet with heat to produce a molded body having a crystallinity degree B, a difference (B - A) between the crystallinity degree A of the foam sheet and the crystallinity degree B of the molded body being 20.0% or more and 40.0% or less.

2. The method according to claim 1, wherein the crystallinity degree A of the foam sheet is 3.8% or less.

3. The method according to claim 1 or 2, wherein the difference (B - A) between the crystallinity degree A of the foam sheet and the crystallinity degree B of the molded body is 30.0% or more and 40.0% or less.

4. The method according to any one of claims 1 to 3, wherein the foam sheet has a bulk density of 0.063 g/cm$^3$ or more and 0.250 g/cm$^3$ or less.

5. The method according to any one of claims 1 to 4, wherein the foam sheet has a foam cell diameter of 800 $\mu$m or less as a median diameter.

# FIG. 1

# FIG. 2

Europäisches
Patentamt

European
Patent Office

Office européen
des brevets

# EUROPEAN SEARCH REPORT

Application Number

EP 23 18 5504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 798 029 A1 (JSP CORP [JP]) 20 June 2007 (2007-06-20) * examples 1, 2, 4-6; table 3 * * paragraphs [0055] - [0057], [0065] - [0066] * | 1-5 | INV. C08J9/12 B21D22/20 C08J9/36 B29C44/56 |
| X | JP 2004 359910 A (JSP CORP) 24 December 2004 (2004-12-24) * examples 1, 2, 9, 10 * | 1-5 | |

TECHNICAL FIELDS
SEARCHED        (IPC)

C08J
B21D
B29C

The present search report has been drawn up for all claims

| Place of search | Date of completion of the search | Examiner |
|---|---|---|
| The Hague | 12 December 2023 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 5504

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2023

| Patent document cited in search report | | Publication date | Patent family member(s) | | Publication date |
|---|---|---|---|---|---|
| EP 1798029 | A1 | 20-06-2007 | AT | E532628 T1 | 15-11-2011 |
| | | | CN | 101035677 A | 12-09-2007 |
| | | | EP | 1798029 A1 | 20-06-2007 |
| | | | JP | 4446385 B2 | 07-04-2010 |
| | | | JP | 2006103098 A | 20-04-2006 |
| | | | US | 2010028654 A1 | 04-02-2010 |
| | | | WO | 2006038548 A1 | 13-04-2006 |
| JP 2004359910 | A | 24-12-2004 | JP | 4258758 B2 | 30-04-2009 |
| | | | JP | 2004359910 A | 24-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007046019 A
- JP 5207277 B
- JP 5454137 B

- JP 2006328225 A
- JP 4842745 B
- JP 2020158608 A

**Non-patent literature cited in the description**

- **INOUE, YOSHIO.** Structure, Properties, and Biodegradability of Aliphatic Polyesters. *KOBUNSHI (High Polymers),* 2001, vol. 50 (6), 374-377